Europäisches Patentamt

European Patent Office

Office européen des brevets

(19)

(11) Numéro de publication : **0 019 572**
**B1**

(12)

# FASCICULE DE BREVET EUROPÉEN

(45) Date de publication du fascicule du brevet :
22.06.83

(51) Int. Cl.³ : **B 65 G 43/10**, B 65 G 47/19

(21) Numéro de dépôt : 80430009.3

(22) Date de dépôt : 06.05.80

(54) **Procédé et dispositifs pour manutentionner des matériaux divisés.**

(30) Priorité : 11.05.79 FR 7912376

(43) Date de publication de la demande :
26.11.80 Bulletin 80/24

(45) Mention de la délivrance du brevet :
22.06.83 Bulletin 83/25

(84) Etats contractants désignés :
CH DE GB IT LI NL SE

(56) Documents cités :
DE B 1 239 622
DE B 1 280 753
GB A 854 215
US A 3 989 989

(73) Titulaire : **TRANSITUBE PROJET Société anonyme dite:**
**Chemin de la Blague**
**F-13100 Aix-en-Provence (FR)**

(72) Inventeur : **Laugier, Alexandre**
**6, rue Roumanille**
**F-13090 Aix-en-Provence (FR)**

(74) Mandataire : **Azais, Henri et al**
**c/o CABINET BEAU DE LOMENIE 14, rue Raphael**
**F-13008 Marseille (FR)**

Jouve, 18, rue St-Denis, 75001 Paris, France

Procédé et dispositifs pour manutentionner des matériaux divisés.

L'invention a pour objet un procédé et des dispositifs pour manutentionner des matériaux divisés, par exemple des matériaux pulvérulents ou en grains.

Dans de nombreux cas pratiques, on utilise des dispositifs de manutention de matériaux divisés qui comportent une trémie dans laquelle le matériau est stocké, un dispositif extracteur situé sous la trémie et un dispositif élévateur dans lequel se déverse l'extracteur. On connaît notamment des élévateurs composés d'une gaine tubulaire à l'intérieur de laquelle un ou plusieurs fils enroulés suivant des hélices, appelés spires hélicoïdales, sont entraînés en rotation. De tels appareils sont appelés élévateurs à spires hélicoïdales. On connaît également des dispositifs extracteurs dits volumétriques, qui comportent un tube axial et une spire hélicoïdale qui occupe tout l'espace intermédiaire entre la gaine externe et ledit tube central. Le débit de ces extracteurs volumétriques est sensiblement proportionnel à la vitesse de rotation de la spire hélicoïdale.

Il faut bien entendu que le débit de l'élévateur soit adapté au débit de l'extracteur pour que la chaîne extracteur-élévateur fonctionne correctement. En aucun cas, le débit moyen de l'élévateur ne peut devenir inférieur à celui de l'extracteur sinon les matériaux s'accumulent dans l'élévateur et celui-ci se bloque, ce qui risque d'entraîner la rupture des spires hélicoïdales ou la détérioration du moteur d'entraînement.

Inversement, un débit de l'extracteur trop inférieur au débit de l'élévateur risque d'entraîner des inconvénients tels que perte de charge, vibrations et détérioration de l'élévateur.

Le débit des extracteurs et des élévateurs à spires hélicoïdales varie avec la nature, la densité et la granulométrie des matériaux. Il en résulte que le réglage des débits respectifs de l'extracteur et de l'élévateur ne peut être fait une fois pour toutes. Il faut le modifier chaque fois que l'on change de matériau et même, pour un même matériau, il peut varier au cours de la vidange d'une trémie.

A ce jour, un moyen pour résoudre ce problème est d'équiper le moteur de l'élévateur et/ou de l'extracteur d'un variateur de vitesse qui permet de faire varier de façon continue la vitesse et donc le débit instantané de ces appareils et de maintenir constamment ces débits sensiblement égaux. Cette solution est onéreuse pour des installations à faible débit car un variateur de vitesse est un appareil dont le coût est élevé en comparaison du coût d'un élévateur à spires hélicoïdales ou d'un extracteur à faible débit. Elle entraîne de plus, un réglage, dont une intervention manuelle, avec des risques d'erreur ou une automatisation coûteuse.

On a déjà été amené à solutionner le problème consistant à régler le débit de deux appareils de transports pour éviter l'engorgement du deuxième appareil.

Un tel dispositif est décrit dans la demande de brevet DE.B. 1.239.622 lequel comporte un premier transporteur à vis d'Archimède, qui est relié par un soufflet à un deuxième transporteur à vis sans fin. Une ceinture élastique entoure ledit soufflet et est reliée à un interrupteur qui commande l'arrêt ou la mise en marche du moteur du transporteur. Dès que le deuxième transporteur s'engorge, le soufflet se gonfle, ce qui provoque l'allongement de ladite bande élastique, laquelle actionne un interrupteur qui arrête le moteur du premier convoyeur.

Le problème à résoudre selon ce document est d'éviter la surcharge du deuxième convoyeur. Le premier transporteur fonctionne en continu et est arrêté dès que le deuxième convoyeur s'engorge.

Dans la demande de brevet DE.B. 1.280.753 on a décrit un dispositif de déchargement d'un silo vertical ayant une ouverture centrale. Ce dispositif comporte un bras pivotant entraîné par un moteur et un transporteur à vis sans fin entraîné par un autre moteur. La vitesse de rotation dudit bras est fonction de la charge du moteur du transporteur de telle sorte que si la charge du moteur dudit transporteur dépasse une valeur supérieure, la vitesse de rotation du bras est réduite. Ce document décrit un relais dont la bobine est placée dans le circuit d'alimentation du moteur du transporteur et dont un contact à ouverture contrôle le moteur qui actionne ledit bras pivotant, chaque fois que la charge du moteur du transporteur dépasse un seuil.

Selon ce dispositif, le transporteur fonctionne en continu.

Un objectif de la présente invention est de permettre de régler le débit continu délivré par un élévateur qui est alimenté par un appareil de transport placé en amont sans avoir à utiliser des variateurs de vitesse.

Un autre objectif de la présente invention est de procurer une solution moins onéreuse que l'utilisation de variateurs de vitesse au problème de l'adaptation mutuelle du débit d'un élévateur et du débit d'un appareil de transport, par exemple d'un extracteur, qui est placé en amont de l'élévateur et qui alimente ce dernier.

Ces objectifs sont atteints par un procédé selon lequel on entraîne l'appareil de transport de façon périodique et, pour régler le débit continu délivré par ledit élévateur, on fait varier volontairement la durée relative des périodes de fonctionnement périodique dudit appareil de transport.

Un dispositif selon l'invention pour manutentionner des matériaux divisés est du type comportant un appareil de transport, par exemple un extracteur sous trémie, et un appareil élévateur placé à l'aval de l'appareil de transport.

Il comporte, en outre, des moyens pour entraîner l'appareil de transport de façon périodique et des moyens pour faire varier la durée relative des périodes de fonctionnement périodique dudit appareil de transport, de sorte que l'on peut ainsi régler le débit instantané continu délivré par ledit élévateur.

Selon l'invention, un dispositif de manutention d'un matériau divisé stocké dans une trémie comporte un extracteur sous trémie entraîné par un premier moteur électrique et un élévateur à spires hélicoïdales qui est placé en aval dudit extracteur et qui est entraîné en rotation par un deuxième moteur électrique et il comporte un programmateur mécanique équipé d'une pluralité de cames différentes agissant chacune sur un contact mobile, un ampèremètre qui indique l'intensité du courant absorbé par le moteur de l'élévateur et un commutateur qui permet de sélectionner l'un desdits contacts mobiles en fonction de l'intensité indiquée par ledit ampèremètre et de l'intercaler dans le circuit d'alimentation d'un relais dont un contact contrôle l'alimentation du moteur de l'extracteur, de sorte que la durée relative des périodes de fonctionnement dudit extracteur dépend de la position dudit commutateur.

L'invention a pour résultat de nouveaux dispositifs de manutention d'un matériau divisé au moyen d'un extracteur sous trémie et d'un élévateur à spires hélicoïdales.

Les dispositifs selon l'invention permettent de réaliser une adaptation entre le débit de l'extracteur et celui de l'élévateur sans intervenir directement sur le débit de ce dernier qui fonctionne toujours à débit optimum. Le réglage du débit moyen de l'installation est obtenu sans qu'il soit nécessaire d'utiliser un variateur de vitesse sur l'élévateur ou sur l'extracteur donc avec des moyens moins onéreux. Malgré le fonctionnement périodique de l'extracteur, le débit instantané de sortie de l'élévateur reste sensiblement constant et égal au débit moyen de l'extracteur grâce au brassage qui se produit dans l'élévateur.

Le dispositif selon l'invention permet d'éviter les risques de blocage et de rupture des élévateurs à spires hélicoïdales lorsqu'ils n'arrivent plus à évacuer le débit de l'extracteur qui les alimente. Il permet d'utiliser successivement une même installation pour stocker et manutentionner des produits divisés de nature différente tout en ayant constamment une bonne adaptation entre le débit de l'extracteur sous trémie et celui de l'appareil élévateur à spires hélicoïdales qui est situé à l'aval de l'extracteur.

La description suivante se réfère aux dessins annexés qui représentent, sans aucun caractère limitatif, des exemples de réalisation de dispositifs selon l'invention.

La figure 1 est une vue d'ensemble schématique d'un dispositif de manutention selon l'invention.

La figure 2 est un schéma des circuits électriques d'un mode de réalisation de l'invention.

La figure 3 est une coupe transversale selon IV-IV de la figure 2.

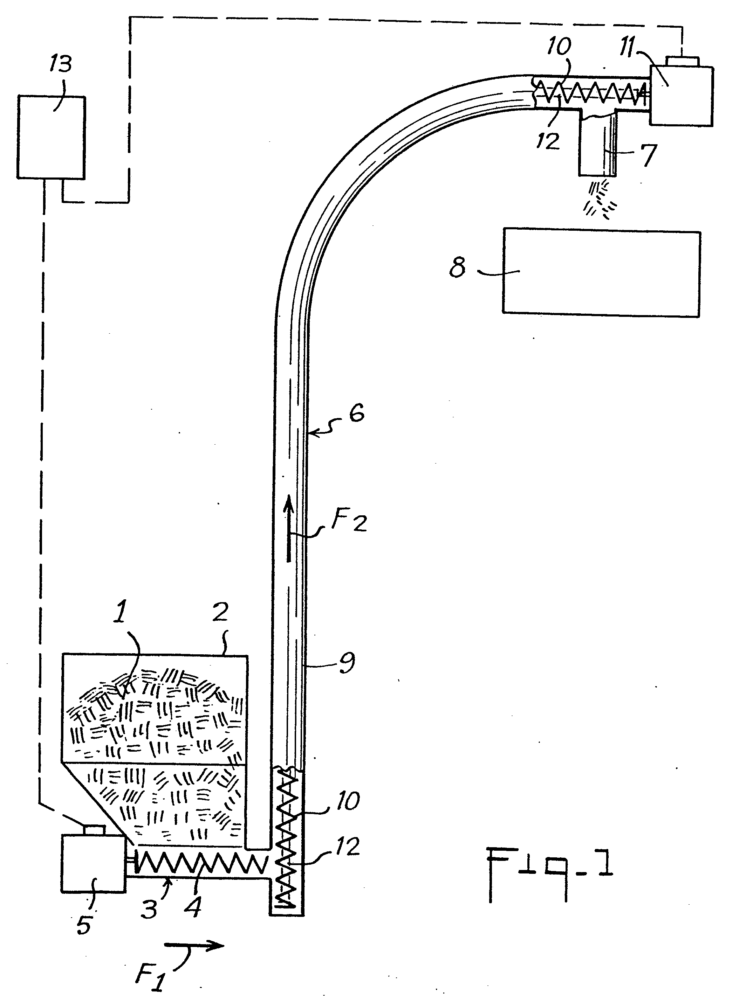

La figure 1 représente un dispositif de manutention d'un matériau divisé 1 qui est soit un produit pulvérulent, par exemple de la farine ou du ciment, soit un produit en grains ou en paillettes, par exemple des résines polymérisables, du sucre cristallisé, un sel etc... Le matériau 1 est stocké dans une trémie 2 qui est équipée d'un dispositif extracteur 3 placé sous la trémie. L'extracteur 3 comporte une ou plusieurs spires hélicoïdales 4, c'est-à-dire des fils enroulés en hélice qui sont entraînés en rotation par un moteur électrique 5 dans un sens tel que le matériau 1 est entraîné suivant la flèche F1. Les spires hélicoïdales 4 peuvent être remplacées par des vis d'Archimède.

L'extracteur 3 pourrait être également un extracteur à bande transporteuse sans fin ou tout autre type d'extracteur connu entraîné par un moteur électrique 5. Le moteur 5 est un moteur surdimensionné ou un moteur ayant un couple de démarrage faible qui peut supporter des démarrages répétés.

L'extracteur 3 est associé à un dispositif élévateur 6 qui est placé à l'aval de l'extracteur. L'élévateur 6 reçoit les matériaux sortant de l'extracteur et les transporte suivant le sens de la flèche F2 vers une goulotte de sortie 7 qui est située généralement à un niveau supérieur à celui de l'extracteur.

La goulotte 7 se déverse dans un appareil 8 de réception ou de transformation du matériau 1 par exemple dans un mélangeur ou un malaxeur ou dans une boudineuse placée en amont d'une presse d'injection de matières plastiques, cette énumération n'étant évidemment pas limitative.

L'élévateur 6 est composé d'une gaine tubulaire 9 dans laquelle est disposée au moins une spire hélicoïdale 10 qui est entraînée en rotation par un moteur électrique 11.

Selon un mode de réalisation préférentiel, l'élévateur 6 comporte une tige centrale 12, plus petite que la gaine 9, avec laquelle elle définit un espace annulaire, et une seule spire hélicoïdale 10 formée par un fil qui est enroulé en hélice et qui a un diamètre légèrement inférieur à la largeur dudit espace annulaire. La gaine 9 et la tige centrale 12 peuvent être flexibles.

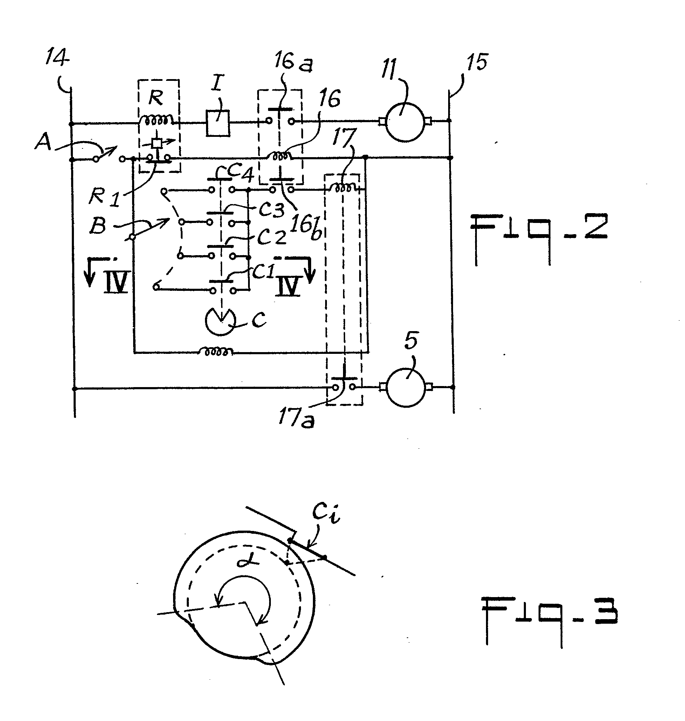

Les moteurs 5 et 11 sont alimentés en courant électrique à partir d'un coffret 13 qui contient des circuits représentés sur les figures 2 et 3.

Le but recherché est d'adapter le débit de l'extracteur 3 au débit de l'élévateur 6 quelle que soit la nature, la densité ou la granulométrie du matériau 1, sans modifier ni la vitesse, ni le débit de l'élévateur 6 qui fonctionne constamment au débit optimum compatible avec le débit de l'extracteur 3.

On notera que le débit instantané qui sort par la goulotte 7 d'un élévateur à spires hélicoïdales est régulier même si le débit instantané qui sort de l'extracteur 3 est périodique, à la condition évidemment que la cadence des intermittences ne soit pas trop faible. En effet, il se produit dans l'élévateur un brassage du matériau qui uniformise le débit de sortie. De plus, l'intensité du courant absorbé par le moteur 11 varie très rapidement avec le débit instantané de sortie. Elle croît exponentiellement comme ce débit et la mesure de cette intensité ou la comparaison à un seuil permet donc de connaître avec précision le débit instantané délivré par l'élévateur 6. Ces propriétés particulières des élévateurs à spires hélicoïdales sont mises à profit dans la présente invention pour adapter le débit de l'élévateur 6 au débit de l'extracteur 3 sans utiliser des variateurs de vitesse.

L'idée mère sur laquelle reposent les dispositifs selon l'invention est que pour adapter les deux débits l'un à l'autre, on peut faire varier le débit de l'extracteur 3 en le segmentant, c'est-à-dire qu'au lieu de faire varier le débit instantané de l'extracteur 3 de façon continue, on le rend intermittent, c'est-à-dire alternativement nul ou égal à une valeur constante, en arrêtant par intermittence l'extracteur 3.

Si l'on désigne par DA le débit instantané constant de l'extracteur 3 et par QA la quantité de matériau transportée par l'extracteur 3 pendant un temps déterminé t, le débit moyen de l'extracteur est égal à QA/t.

La quantité QA transportée pendant un temps t est égale à DA × t1, t1 étant la durée de fonctionnement de l'extracteur. Le débit moyen de l'extracteur varie donc comme le rapport t1/t, que nous appellerons la durée relative des intermittences de fonctionnement et on peut donc faire varier le débit moyen de l'extracteur en modulant la durée relative des intermittences de fonctionnement de l'extracteur, de telle sorte que le débit moyen de l'extracteur soit inférieur ou égal au débit instantané sensiblement constant délivré par l'élévateur 6.

La figure 2 représente un mode de réalisation des circuits électriques permettant de faire varier la durée relative des périodes de fonctionnement périodique de l'extracteur par rapport aux périodes d'arrêt de cet extracteur. On précise que le débit instantané de l'extracteur 3 reste sensiblement constant pendant toutes les périodes de fonctionnement de l'extracteur.

On retrouve sur la figure 2 les moteurs électriques 5 et 11 de l'extracteur et de l'élévateur qui sont connectés entre deux conducteurs d'alimentation 14 et 15. Sur le conducteur qui alimente le moteur 11 de l'élévateur, est intercalée la bobine R d'un relais ampèremétrique à maximum d'intensité qui contrôle la puissance absorbée par le moteur 11 en la comparant à un seuil.

La mise en route et l'arrêt du moteur 11 sont contrôlés par un contact à fermeture 16a d'un relais 16 qui est intercalé sur le conducteur qui alimente le moteur 11. De même, la mise en route et l'arrêt du moteur 5 sont contrôlés par le contact à fermeture 17a d'un relais 17.

Les bobines des relais 16 et 17 sont alimentées à travers un interrupteur A de marche-arrêt. La bobine du relais 16 est alimentée à travers le contact à ouverture R1 du relais R.

La bobine du relais 17 est alimentée à travers le contact à ouverture R1 du relais R et également à travers un deuxième contact à fermeture 16b du relais 16.

Le fonctionnement est le suivant. Au démarrage, le contact à ouverture R1 est fermé, les contacts 16a, 16b et 17a sont ouverts comme le représente la figure 2. On ferme l'interrupteur A. Les bobines des relais 16 et 17 sont excitées, les contacts 16a, 16b puis 17a se ferment, les moteurs 5 et 11 se mettent en marche. Si l'élévateur 6 reçoit trop de matériau, c'est-à-dire reçoit un débit instantané supérieur à son débit de sortie optimum, du matériau s'accumule dans l'élévateur et l'intensité du courant qui traverse la bobine R croît rapidement et atteint le seuil du relais R. Le contact R1 s'ouvre. La bobine 17 n'est plus alimentée et le moteur 5 s'arrête momentanément pendant que l'élévateur continue à délivrer le matériau. La quantité de matériau contenue dans l'élévateur 6 diminue, l'intensité du courant redevient inférieure au seuil du relais R, le contact R1 se referme et le moteur 5 redémarre pour un nouveau cycle.

Dans le cas où la spire hélicoïdale 10 est bloquée, l'intensité consommée par le moteur 11 croît brusquement et atteint le seuil du relais R. Le contact R1 s'ouvre, la bobine du relais 16 n'est plus excitée et les contacts 16a et 16b s'ouvrent et arrêtent à la fois le moteur 11 et le moteur 5 et les remet en marche après une légère temporisation.

Le repère I représente un ampèremètre qui indique l'intensité du courant absorbé par le moteur 11 de l'élévateur. Le repère B représente un commutateur par exemple à quatre positions. Le repère C représente un programmateur à cames. Le programmateur C comporte un moteur synchrone qui entraîne simultanément quatre cames dont chacune agit sur un contact mobile C1 à C4. Les quatre cames occupent des secteurs angulaires d'ouverture variable et chaque contact C1 à C4 est ouvert ou fermé pendant qu'il se trouve en face d'une came.

La figure 3 représente un mode de réalisation d'une came circulaire qui occupe un secteur angulaire α et qui ferme un contact Ci. La durée des périodes de fonctionnement du moteur 5 de l'extracteur est égale à la durée de fermeture du contact Ci qui se trouve placé dans le circuit de la bobine 17 par la position du commutateur B. Dans le cas de la figure 3, la durée relative des périodes de fonctionnement du moteur 5 est égale à $\alpha/2\pi$.

L'ampèremètre I permet de connaître l'intensité du courant consommée par le moteur 11 de l'élévateur et l'utilisateur place manuellement le commutateur B sur la position donnée par le constructeur en fonction de l'intensité lue sur l'ampèremètre.

Le commutateur B et le programmateur à cames C permettent de modifier la durée relative des périodes de fonctionnement de l'extracteur 5 en choisissant celle-ci parmi quatre rapports possibles en fonction de la nature du matériau 1.

Dans l'exemple qui vient d'être décrit, on a choisi comme paramètre indiquant le débit de l'élévateur la puissance consommée par le moteur 11, c'est-à-dire l'intensité du courant consommé par ce moteur. Il est précisé que l'on peut utiliser d'autres capteurs de débit équivalents par exemple un capteur qui mesure l'allon-

7 **0 019 572** 8

gement de la spire 10 qui s'allonge en fonction du débit ou bien des capteurs de vitesse de rotation du moteur 11.

Bien entendu, sans sortir du cadre de l'invention tel que défini par les revendications, les divers éléments constitutifs du dispositif qui vient d'être décrit à titre d'exemple pourront être remplacés par des éléments équivalents remplissant les mêmes fonctions.

## Revendications

1. Procédé pour manutentionner des matériaux divisés au moyen d'un appareil de transport (3) dudit matériau et d'un élévateur (6) placé à l'aval dudit appareil de transport (3) et pour régler le débit continu délivré par ledit élévateur (6), caractérisé en ce qu'on entraîne ledit appareil de transport (3) de façon périodique et, pour régler le débit continu délivré par l'appareil élévateur (6), on fait varier volontairement la durée relative des périodes de fonctionnement périodique dudit appareil de transport (3).

2. Dispositif de manutention d'un matériau divisé (1) stocké dans une trémie (2) comportant un extracteur sous trémie (3), entraîné par un premier moteur électrique (5) et un élévateur (6) à spires hélicoïdales (10) qui est placé en aval dudit extracteur (3) et qui est entraîné en rotation par un deuxième moteur électrique (11), caractérisé en ce qu'il comporte un programmateur mécanique (C) équipé d'une pluralité de cames différentes agissant chacune sur un contact mobile (C1, C4), un ampèremètre (I) qui indique l'intensité du courant absorbé par le moteur (11) de l'élévateur (6) et un commutateur (B) qui permet de sélectionner l'un desdits contacts mobiles (C1, C4) en fonction de l'intensité indiquée par ledit ampèremètre (I) et de l'intercaler dans le circuit d'alimentation d'un relais (17) dont un contact (17a) contrôle l'alimentation du moteur (5) de l'extracteur (3), de sorte que la durée relative des périodes de fonctionnement dudit extracteur dépend de la position dudit commutateur (B).

## Claims

1. Method for handling divided materials using means (6) for conveying said materials and an elevator (6) placed downstream of said conveying means (3) and controlling the continuous flow delivered by the said elevator (6), characterised in that the said conveying means (3) are driven in intermittent manner and in that, to control the continuous flow delivered by the elevator (6), the relative duration of the intermittent working periods of the said conveying means (3) are purposely caused to vary.

2. Device for handling a divided material (1) stored in a hopper (2) comprising an extractor (3) under the hopper driven by a first electric motor (5) and an elevator (6) with helical spires (10) which is placed downstream of said extractor (3) and which is driven in rotation by a second electric motor (11), characterised in that it comprises a mechanical programmer (C) equipped with a plurality of different cams, each one acting on a movable contact (C1, C4), an ammeter (I) which indicates the strength of the current absorbed by the motor (11) of the elevator (6) and a switch (B) permitting to select one of said movable contacts (C1, C4) in relation to the strength indicated by said ammeter (I) and to introduce it into the supply circuit of a relay (17) of which one contact (17a) controls the supply of the motor (5) of the extractor (3), so that the relative duration of the working periods of the said extractor is dependent on the position of the said switch (B).

## Ansprüche

1. Verfahren zum Fördern von Schüttgütern mit Hilfe einer Austrageinrichtung (3) für das Fördergut und eines stromab davon angeordneten Senkrechtförderers (6) und zum Regeln des von diesem Senkrechtförderer (6) abgegebenen stetigen Durchsatzes, dadurch gekennzeichnet, daß man die Austrageinrichtung (3) in periodischer Weise betreibt und zum Regeln des stetigen von dem Senkrechtförderer (6) abgegebenen Durchsatzes die relative Dauer der Betriebsperioden für die Austrageinrichtung (3) variiert.

2. Vorrichtung zum Fördern von in einem Bunker (2) enthaltenem Schüttgut (1) mit einer unterhalb des Bunkers (2) angeordneten und durch einen ersten Elektromotor (5) angetriebenen Austrageinrichtung (3) und mit einem stromab davon angeordneten Senkrechtförderer (6) mit einer durch einen zweiten Elektromotor (11) in Rotation versetzbaren Schnecke (10), dadurch gekennzeichnet, daß sie einen mechanischen Programmgeber (C) mit einer Mehrzahl von verschiedenen Nocken, von denen jeder auf einen beweglichen Kontakt (C1, C4) arbeitet, ein Amperemeter (7), das die Stärke des von dem Motor (11) für den Senkrechtförderer (6) aufgenommenen Stromes anzeigt, und einen Umschalter (B) aufweist, der es gestattet, in Abhängigkeit von der durch das Amperemeter (7) angezeigten Stromstärke einen der beweglichen Kontakte (C1, C4) auszuwählen und in den Speisestromkreis für ein Relais (17) einzuschalten, von dem ein Kontakt (17a) die Speisung des Motors (5) für die Austrageinrichtung (3) steuert, derart, daß die relative Dauer der Betriebsperioden der Austrageinrichtung von der Stellung des Umschalters (B) abhängt.

Fig-1

Fig.2

Fig.3